# FASCICULE DE BREVET EUROPEEN

(11) **EP 2 257 704 B1**
(45) Date de publication et mention de la délivrance du brevet: **30.03.2016**
(21) Numéro de dépôt: 09738306.1
(22) Date de dépôt: 31.03.2009
(51) Int. Cl.: F02K 1/34, F02K 1/46

(54) **DISPOSITIF DE RÉDUCTION DU BRUIT GÉNÉRÉ PAR UN RÉACTEUR D'AÉRONEF À JETS DE FLUIDE DE MÊME ORIENTATION**
VORRICHTUNG ZUR REDUZIERUNG DES DURCH EIN FLUGZEUGDÜSENTRIEBWERK ERZEUGTEN LÄRMS MIT GLEICH AUSGERICHTETEN FLÜSSIGKEITSDÜSEN
DEVICE FOR REDUCING THE NOISE GENERATED BY AN AIRCRAFT JET ENGINE WITH FLUID JETS OF THE SAME ORIENTATION

(30) Priorité: 31.03.2008 FR 0852121
(43) Date de publication de la demande: 08.12.2010
(73) Titulaire: AIRBUS OPERATIONS, 31060 Toulouse (FR); Centre National de la Recherche Scientifique (CNRS), 75016 Paris (FR); Université De Poitiers, 86034 Poitiers Cedex (FR)
(72) Inventeur: HUBERT, Jérôme, F-31000 Toulouse (FR); BONNET, Jean-Paul, F-86000 Poitiers (FR); DELVILLE, Joël, F-86000 Poitiers (FR); JORDAN, Peter, F-79120 ROM (FR); STREKOWSKI, François, F-86000 Poitiers (FR)
(74) Mandataire: Santarelli
(86) Numéro de dépôt international: PCT/FR2009/000375
(87) Numéro de publication internationale: WO 2009/133272

(56) Documents cités:
- EP-A2- 1 580 417
- EP-A2- 1 936 172
- WO-A2-2008/100712
- FR-A- 1 542 668
- FR-A- 2 872 549
- FR-A- 2 892 152
- US-A- 2 990 905
- B. GRESKA, A. KROTHAPALLI: "The Effects of Microjet Injection on an F404 Jet Engine (AIAA 2005-3047)" 11TH AIAA/CEAS AEROACOUSTICS CONFERENCE (26TH AIAA AEROACOUSTICS CONFERENCE), [Online] 23 mai 2005 (2005-05-23), - 25 mai 2005 (2005-05-25) XP002519066 MONTERY, CALIFORNIA, USA Extrait de l'Internet: URL:http://pdf.aiaa.org/preview/CDReadyMAE RO05_1140/PV2005_3047.pdf> [extrait le 2009-03-12]
- M. B. ALKISLAR, G. W. BUTLER: "Significant Improvements on Jet Noise Reduction by Chevron-Microjet Combination (AIAA 2007-3598)" 12TH AIAA/CEAS AEROACOUSTICS CONFERENCE (28TH AIAA AEROACOUSTICS CONFERENCE), [Online] 21 mai 2007 (2007-05-21), - 23 mai 2007 (2007-05-23) XP002518550 Extrait de l'Internet: URL:http://pdf.aiaa.org/preview/CDReadyMAE RO07_1493/PV2007_3598.pdf> [extrait le 2009-03-10]
- B. S. HENDERSON, K. W. KINZIE, J. WHITMIRE, A. ABEYSINGHE: "The Impact of Fluidic Chevrons on Jet Noise (AIAA 2005-2888)" 11TH AIAA/CEAS AEROACOUSTICS CONFERENCE (26TH AEROACOUSTICS CONFERENCE), [Online] 23 mai 2005 (2005-05-23), - 25 mai 2005 (2005-05-25) XP002518551 MONTEREY, CALIFORNIA, USA Extrait de l'Internet: URL:http://pdf.aiaa.org/preview/CDReadyMAE RO05_1140/PV2005_2888.pdf> [extrait le 2009-03-10]

## Description

L'invention est relative à un réacteur d'aéronef.

De façon connue, un réacteur d'aéronef se présente sous la forme d'une nacelle au centre de laquelle est positionnée une turbomachine.

Cette nacelle est destinée à être montée sous la voilure d'un aéronef par l'intermédiaire d'un mât de réacteur.

La turbomachine est composée d'un générateur de gaz qui entraine une soufflante montée sur l'arbre du générateur de gaz, en amont de ce dernier suivant la direction longitudinale'de la nacelle de réacteur.

Le flux d'air qui traverse longitudinalement la nacelle pénètre en partie dans le générateur de gaz et participe à la combustion.

Ce flux est appelé flux primaire et est éjecté en sortie du générateur.

La partie du flux d'air entrant dans la nacelle et qui ne traverse pas le générateur de gaz est entrainée par la soufflante.

Ce flux, appelé flux secondaire, s'écoule dans un passage annulaire, de façon concentrique par rapport au flux primaire. Ce passage est formé entre une paroi longitudinale externe (paroi de nacelle) et une paroi longitudinale interne entourant le générateur de gaz.

Le flux secondaire est éjecté de la nacelle à l'extrémité aval de la paroi externe de celle-ci suivant la direction sensiblement longitudinale du réacteur.

La paroi interne entourant le générateur du gaz définit également avec une pièce longitudinale interne un passage annulaire par lequel s'écoule le flux primaire.

Ce flux est éjecté à l'extrémité aval de la paroi interne qui entoure le générateur de gaz.

Lors des phases de décollage, le flux de gaz qui est éjecté (flux primaire et secondaire) adopte des vitesses très élevées. À ces vitesses, la rencontre du flux éjecté avec l'air environnant, de même que la rencontre du flux primaire et du flux secondaire génèrent un bruit important.

On connaît d'après la demande internationale WO2002/013243 un dispositif fluidique de réduction du bruit généré par un réacteur d'aéronef.

Ce dispositif comporte plusieurs paires de conduits débouchant en sortie d'une tuyère du réacteur éjectant un jet propulsif et qui sont répartis à la périphérie de cette tuyère.

Les conduits de chaque paire éjectent chacun un jet d'air et sont disposés de façon convergente l'un par rapport à l'autre pour générer en sortie un triangle d'interaction des jets d'air ou « triangle fluide ».

L'angle de convergence des conduits est compris entre 40 et 70°.

Ce dispositif est satisfaisant pour de petites dimensions de tuyères. Cependant, lorsque les diamètres des tuyères adoptent des valeurs relativement élevées, par exemple de l'ordre du mètre, le dispositif précité perd de son efficacité.

Les jets de fluide issus des conduits convergents ne peuvent en effet interagir avec l'intégralité du jet propulsif éjecté par la tuyère. De ce fait, une partie de celui-ci rencontre l'écoulement périphérique externe d'air, générant ainsi du bruit.

Par ailleurs, bien que les micro-jets convergents soient efficaces en générant des triangles fluides, leur convergence peut provoquer des interactions générant des bruits parasites à plus hautes fréquences. Un autre dispositif fluidique de réduction du bruit est divulgué dans la demande de brevet FR 2 892 152.

Il existe donc un besoin de réduire le bruit provoqué par l'éjection du ou des flux de gaz en sortie de la nacelle de réacteur d'un aéronef.

À cet effet, l'invention a pour objet un réacteur d'aéronef selon la revendication 1, comprenant une paroi entourant un flux de gaz qui est éjecté à une extrémité aval de la paroi suivant l'axe longitudinal, plusieurs conduits répartis à la périphérie de l'extrémité aval de la paroi et comprenant chacun une portion terminale munie d'un orifice de sortie, chaque conduit étant apte à éjecter un jet de fluide par son orifice de sortie, caractérisé en ce que les conduits sont conformés de façon à éjecter des jets de fluide sensiblement parallèles entre eux , chaque jet de fluide éjecté par l'orifice de sortie correspondant formant un angle de dérapage avec l'axe longitudinal XX' suivant une vue en projection dans un plan contenant l'axe longitudinal.

En orientant tous les jets de fluide issus des orifices dans la même direction suivant une même incidence latérale (angle de dérapage de même signe) ces jets ne convergent pas et l'on évite donc des interactions entre jets qui sont à l'origine de bruits parasites.

Les jets de fluide réalisent une interaction avec le jet propulsif (flux de gaz éjecté) de nature comparable à celle des jets convergents (décrits dans la demande WO2002/013243) dans la génération de tourbillons longitudinaux. Toutefois, ils ne forment pas de triangle fluide et ne mettent donc pas en oeuvre certaines générations de tourbillons propres à ces perturbations fluidiques triangulaires.

Ces jets ainsi orientés (avec une incidence latérale) se répartissent à la périphérie externe du flux de gaz éjecté longitudinalement et s'enroulent autour de ce dernier à la manière d'une hélice.

Les jets de fluide ainsi générés réduisent l'interaction entre le flux de gaz éjecté à l'extrémité aval de la paroi et le flux de gaz (par exemple l'air) s'écoulant en périphérie externe de la paroi du réacteur.

De ce fait, le flux externe est moins facilement entrainé par l'éjection à haute vitesse du flux de gaz qu'auparavant et le bruit généré par la rencontre de ces flux est donc réduit.

Plus les jets de fluide sont rapprochés, plus ils contribuent à former un écran fluidique autour du flux de gaz éjecté, créant en quelque sorte une gaine d'isolation acoustique empêchant les interactions d'écoulement qui sont à l'origine du bruit.

Il convient de noter toutefois qu'il existe un compromis entre le nombre de jets et le débit acceptable qui correspond à un prélèvement sur le moteur devant être limité à quelques pourcents.

Par ailleurs, si l'on avait une continuité des jets suivant la périphérie, il n'y aurait pas de génération de tourbillons longitudinaux et l'on n'introduirait aucune rupture des modes azimutaux.

On notera que ce sont les conduits qui confèrent aux jets de fluide, de par leur configuration ou conformation géométrique, leur orientation géométrique par rapport au flux de gaz éjecté et, notamment, l'angle de dérapage de ces jets isolés les uns des autres.

Selon une caractéristique, les conduits sont conformés de façon à éjecter chaque jet de fluide de façon inclinée en direction de l'axe longitudinal XX' suivant un angle de pénétration qui est, par exemple, compris entre 8° (faible pénétration) et 60° (forte pénétration).

Cette inclinaison sur l'axe longitudinal qui constitue l'axe du flux de gaz éjecté permet aux jets de fluide éjectés avec une incidence latérale donnée d'interagir avec ce flux à la manière des jets convergents mentionnés ci-dessus en référence à la demande WO2002/013243.

Cette interaction génère des tourbillons longitudinaux qui sont efficaces pour amplifier l'effet produit par de simples jets.

Selon une première approche, l'angle de dérapage est formé par l'orientation de la portion terminale d'un conduit avec l'axe longitudinal XX', tandis que l'angle de pénétration est formé par l'inclinaison de l'orifice de sortie du conduit en direction de l'axe longitudinal XX'.

Les deux orientations différentes des jets de fluide sont donc données par deux éléments distincts de chaque conduit : la portion terminale qui peut être coudée par rapport à la portion amont du conduit et l'orifice de sortie qui peut être conformé (ex biseauté ...) de façon appropriée pour conférer l'orientation complémentaire souhaitée.

Dans cet exemple, la portion terminale du conduit est coudée latéralement et l'orifice de sortie est orienté vers l'axe longitudinal.

Selon une deuxième approche, l'angle de dérapage est formé par l'orientation de l'orifice de sortie d'un conduit avec l'axe longitudinal XX' tandis que l'angle de pénétration est formé par l'inclinaison de la portion terminale d'un conduit en direction de l'axe longitudinal XX'.

Dans cet exemple, la portion terminale du conduit est coudée en direction de l'axe longitudinal et l'orifice de sortie est orienté latéralement.

L'une ou l'autre de ces approches peut être adoptée en fonction des contraintes d'intégration à la paroi du réacteur (intégration en face externe ou interne de la paroi ou dans l'épaisseur de celle-ci) et de la configuration du réacteur.

La répartition des conduits n'est pas forcément régulière selon la périphérie. Par exemple, les conduits peuvent être répartis par groups de trois ou plus, avec des intervalles entre les groupes de façon à générer des tourbillons longitudinaux entre les groupes. De plus, la répartition en périphérie peut être adaptée en fonction de contraintes liées à la géométrie du moteur, comme par exemple pour tenir compte de la présence du sillage du mât. Aussi, on peut vouloir rompre une périodicité azimutale (pour changer des modes acoustiques) ou ne pas agir de la même façon par rapport au bruit perçu au sol et au bruit généré vers le ciel.

Selon une caractéristique, les conduits sont conformés de façon à éjecter chaque jet de fluide en formant, avec l'axe longitudinal XX' un angle de dérapage qui est compris entre 40 et 70° et, par exemple, égal à 60°.

Une incidence latérale relativement forte est nécessaire afin que les jets de fluide produits adoptent une orientation qui leur permet d'interagir efficacement avec le flux de gaz éjecté.

En fonction de cette orientation des jets il est possible de moduler l'interaction entre les jets et le flux éjecté le long de l'axe longitudinal du réacteur.

Selon une caractéristique, les conduits appelés conduits primaires, sont écartés les uns des autres, au moins un conduit appelé conduit secondaire étant associé à chaque conduit primaire et disposé de façon adjacente et parallèle à celui-ci.

On peut disposer plusieurs conduits côte à côte, parallèlement entre eux (en faisceau) de façon à éjecter des jets de fluide parallèles suivant la même direction, en dérapage par rapport à l'angle longitudinal.

On forme ainsi une nappe fluidique qui offre une couverture fluidique plus étendue que celle produite par un seul conduit.

De ce fait, l'écran fluidique est plus large et est donc davantage imperméable à l'écoulement externe à la paroi du réacteur.

La réduction de bruit obtenue par cette disposition des conduits est donc augmentée.

En outre, les jets n'étant pas concourants ils ne génèrent pas de sources parasites d'interaction.

On notera que les différents conduits associés peuvent adopter des inclinaisons en direction de l'axe longitudinal (angle de pénétration) différentes d'un conduit à l'autre afin de moduler l'effet fluidique et la configuration du faisceau fluidique ainsi formé.

Selon une caractéristique, l'extrémité aval de la paroi comporte une pluralité de chevrons répartis à la périphérie de celle-ci afin de former un dispositif mécanique d'atténuation acoustique.

Les chevrons interagissent avec le flux de gaz issu de l'extrémité aval où ils sont disposés, donnant ainsi naissance à des tourbillons qui se propagent le long du flux (dans la direction longitudinale du réacteur) et contribuent à réduire le bruit.

Lorsque les conduits d'éjection de fluide sont agencés en relation avec l'extrémité aval de la paroi, les chevrons peuvent être aménagés au niveau de cette même extrémité pour renforcer l'effet d'atténuation du bruit généré par le réacteur.

À titre de variante, les chevrons peuvent être aménagés au niveau d'une autre extrémité aval de paroi qui entoure la sortie d'un autre flux éjecté du réacteur.

Selon une autre variante, les conduits d'éjection de fluide et les chevrons peuvent être intégrés à la même extrémité aval de paroi, tandis qu'une autre extrémité aval de paroi entourant la sortie d'un autre flux éjecté du réacteur peut également être équipée de chevrons seuls ou de conduits seuls ou bien de chevrons en coopération avec des conduits.

Selon une caractéristique, les conduits sont associés aux chevrons qui confèrent à l'extrémité aval de la paroi une forme dentelée comprenant une succession de sommets et de creux.

Le jet fluidique sortant de chaque conduit s'associe au tourbillon longitudinal généré au niveau du chevron associé et renforce ainsi son action antibruit.

Selon une caractéristique, chaque chevron comprenant une partie inclinée reliant le sommet à un creux adjacent, les conduits sont conformés en relation avec les chevrons de façon à ce que chaque jet de fluide soit éjecté parallèlement à la direction d'inclinaison d'une des parties inclinées du chevron correspondant.

Chaque conduit est par exemple agencé le long d'une de ces parties inclinées d'un chevron et son orifice de sortie est disposé au sommet du chevron.

Ainsi agencés, les conduits produisent des jets qui prolongent en quelque sorte les effets des chevrons en leur donnant une incidence. On réalise ainsi, en quelque sorte, des chevrons très dissymétriques, et ceci de façon fluide, c'est-à-dire sans pénaliser les performances aérodynamiques en vol de croisière.

L'invention a également pour objet un aéronef comprenant au moins un réacteur d'aéronef conforme au bref exposé mentionné ci-dessus.

D'autres caractéristiques et avantages apparaîtront au cours de la description qui va suivre, donnée uniquement à titre d'exemple non limitatif et faite en référence aux dessins annexés, sur lesquels :
- la figure 1 est une vue générale schématique en coupe longitudinale d'un réacteur d'aéronef dans laquelle seule la partie supérieure du capot de soufflante a été enlevée;
- la figure 2a est une vue schématique en perspective d'une extrémité aval de paroi de nacelle équipée selon un mode de réalisation qui ne fait pas partie de l'invention;
- la figure 2b est une vue schématique partielle en vue de dessus de trois conduits représentés à la figure 2a ;
- la figure 2c est une vue schématique partielle suivant A montrant l'inclinaison sur l'axe (angle de pénétration) des jets issus des conduits ;
- la figure 2d illustre de façon schématique la configuration d'un conduit coudé incliné sur l'axe XX' ;
- la figure 2e illustre une variante de réalisation de la configuration de la figure 2d ;
- la figure 2f illustre de façon schématique l'implantation d'un conduit dans la paroi de la nacelle ;
- la figure 3 est une vue schématique en perspective d'une extrémité aval de paroi de nacelle équipée selon un mode de réalisation de l'invention;
- la figure 4a est une vue schématique partielle en perspective d'une extrémité aval de paroi de nacelle équipée selon un mode de réalisation qui ne fait pas partie de l'invention;
- la figure 4b est une vue schématique partielle en perspective d'une extrémité aval de paroi de nacelle équipée selon un mode de réalisation de l'invention.

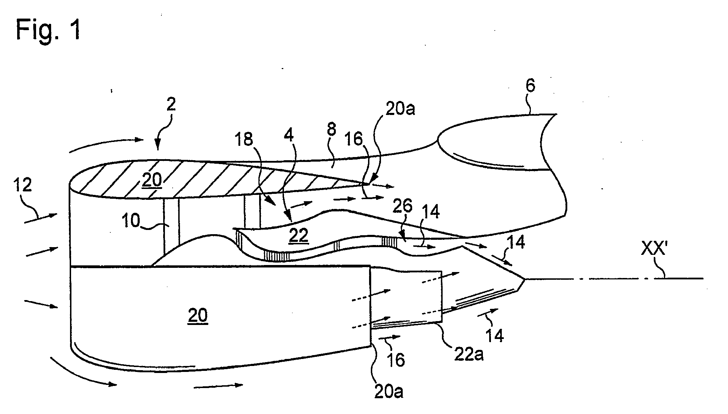

Comme représenté à la figure 1 et désigné par la référence générale notée 2, une nacelle de réacteur d'aéronef enveloppe une turbomachine 4 et est montée sous une aile 6 d'un aéronef de façon connue grâce à un mât de réacteur 8.

La turbomachine 4 comprend un générateur de gaz qui entraine une soufflante 10 montée sur l'arbre du générateur, en amont de ce dernier suivant la direction longitudinale de la nacelle de réacteur.

La nacelle présente une symétrie de révolution autour de l'axe longitudinal XX'.

Le flux d'air 12 qui entre dans la nacelle, traverse longitudinalement celle-ci, pénètre en partie dans le générateur de gaz 4 et participe à la combustion.

Le flux propulsif chaud 14 éjecté en sortie du générateur est appelé flux primaire.

La partie du flux d'air 12 entrant dans la nacelle et qui ne traverse pas le générateur de gaz est entraînée par la soufflante 10.

Ce flux propulsif froid 16, appelé flux secondaire, s'écoule dans un passage annulaire 18 agencé de façon concentrique par rapport au flux primaire 14.

Ce passage 18 est formé entre une paroi longitudinale externe 20 (capot de nacelle) et une paroi longitudinale interne 22 (capot moteur) entourant le générateur de gaz.

Le flux secondaire 16 est éjecté de la nacelle à l'extrémité aval 20a de la paroi externe 20, sensiblement suivant la direction longitudinale du réacteur.

La paroi longitudinale interne 22 définissant l'enveloppe externe du générateur de gaz définit avec la partie longitudinale centrale 24 constituant le coeur du moteur un autre passage annulaire 26 par lequel s'écoule le flux primaire 14.

Ce flux est plus particulièrement éjecté à l'extrémité aval 22a de la paroi interne 22.

Un dispositif fluidique de réduction du niveau sonore du réacteur selon l'invention est appliqué à la nacelle de réacteur 2 de la figure 1.

Ce dispositif est par exemple agencé en relation avec la paroi extérieure 20 (capot extérieur) sensiblement cylindrique de la nacelle et qui entoure le passage annulaire 18 par lequel est éjecté le flux secondaire 16.

Il peut également être agencé en relation avec la paroi intérieure 22 (capot intérieur) de la nacelle qui entoure la turbomachine 4 et à l'extrémité de laquelle est éjecté le flux primaire 14.

On notera qu'un dispositif fluidique peut être prévu à l'une et/ou à l'autre des deux parois concentriques (capots extérieur et intérieur).

Plus particulièrement, le dispositif fluidique selon l'invention est associé à une extrémité dite aval 20a et/ou 22a de la paroi concernée, au niveau du bord de fuite de celle-ci (également appelé lèvre de sortie).

Le dispositif fluidique selon l'invention est apte à générer, sur commande, une perturbation de l'écoulement immédiatement en aval de l'extrémité aval de la paroi à la périphérie extérieure du flux (primaire ou secondaire) éjecté par cette extrémité.

On notera que le dispositif fluidique selon l'invention peut être ajouté simplement à une tuyère de nacelle de réacteur existante, sans remettre en cause toute la conception et la fabrication de cette dernière.

La perturbation fluidique modifie la façon dont le flux éjecté rencontre le flux extérieur (qui est l'air environnant la nacelle lorsque le flux éjecté est le flux secondaire) et interagit avec le flux éjecté afin de former des tourbillons qui se propagent longitudinalement vers l'aval.

Le phénomène précité a pour but de diminuer le bruit généré par le réacteur ainsi équipé, notamment lors des phases de décollage et d'approche de l'aéronef.

Le dispositif selon l'invention peut revêtir différentes formes de réalisation et certaines structures du dispositif vont être décrites dans ce qui suit.

Toutefois, chacune de ces structures offre l'avantage de réduire de façon efficace le bruit généré par un réacteur de grandes dimensions (par exemple, diamètre de la couronne extérieure de la nacelle de l'ordre du mètre).

Cet avantage est obtenu grâce au fait que la perturbation fluidique générée forme un écran fluidique (barrière) imperméable ou quasi-imperméable au flux (primaire ou secondaire) éjecté.

Ainsi, l'entrainement du flux extérieur de vitesse axiale inférieure dans le flux éjecté de vitesse axiale supérieure est empêché ou, en tout cas limité. Il s'ensuit que la production de turbulence fine responsable de la radiation acoustique en haute fréquence est fortement réduite.

Pour ce faire, les moyens constitutifs du dispositif qui sont aptes à générer une perturbation fluidique comportent plusieurs conduits d'éjection de jets de fluide qui sont disposés à la périphérie de l'extrémité aval d'une des parois 20 ou 22 et avec la même orientation géométrique.

Ainsi, les jets de fluide générés sur commande par ces conduits ont sensiblement la même orientation angulaire par rapport à l'axe longitudinal du réacteur. Ils ne sont pas alignés avec cet axe longitudinal.

Les jets issus des conduits forment en effet chacun un angle de dérapage quasi-identique avec l'axe longitudinal (suivant une vue en projection dans un plan contenant cet axe).

L'injection de ces jets en dérapage par rapport à l'axe longitudinal du flux éjecté (flux primaire ou secondaire) à l'extrémité aval de la paroi favorise la formation de vorticités longitudinales. Ces vorticités longitudinales sont créées par interaction des jets de fluide avec la couche de mélange du flux (primaire ou secondaire) éjecté dans laquelle le gaz du flux s'enroule autour de chaque jet.

Ces vorticités longitudinales réduisent ainsi l'efficacité acoustique du flux éjecté.

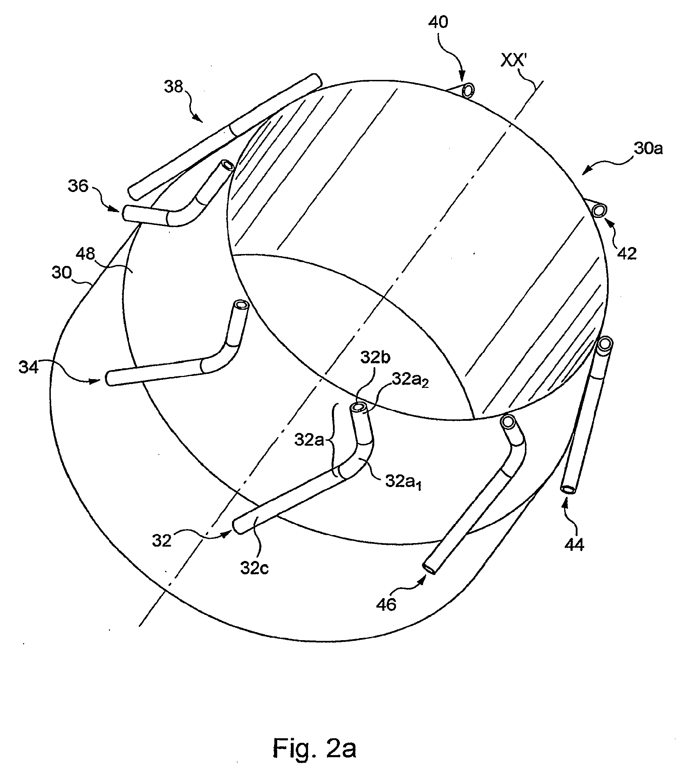

Sur la figure 2a, plusieurs dispositifs équipent l'une des deux parois de nacelle représentées à la figure 1 et qui, ici est référencée 30. La paroi représentée à la figure 2a forme une tuyère dans laquelle s'écoule un flux (primaire ou secondaire) qui est éjecté à l'extrémité aval 30a de la paroi suivant la direction donnée par l'axe XX'.

Les dispositifs fluidiques 32, 34, 36, 38, 40, 42, 44, 46 sont, par exemple, régulièrement répartis à la périphérie extérieure de l'extrémité aval 30a de la paroi, au niveau de la couronne de sortie 48, et sont écartés les uns des autres.

On notera que, dans d'autres formes de réalisation, les dispositifs peuvent être intégrés dans l'épaisseur de la paroi ou sur la face interne de celle-ci qui est en contact avec l'écoulement du flux (primaire ou secondaire) éjecté.

Il convient également de noter que les dispositifs peuvent être répartis de façon différente selon l'azimut.

Ceci permet par exemple de tenir compte de la présence du mât réacteur 8 qui modifie l'écoulement.

Cet agencement non homogène permet également de prendre en compte la directivité du bruit et les contraintes réglementaires en matière de bruit par rapport au voisinage. Il est en effet préférable de limiter le bruit rayonné vers le sol plutôt que le bruit rayonné vers le ciel.

On va maintenant décrire la constitution des dispositifs en prenant pour exemple le dispositif 32, tous les autres dispositifs étant identiques à celui-ci dans ce mode de réalisation.

Le dispositif 32 comporte un conduit qui est relié, par exemple, via une tubulure d'amenée d'air (non représentée), à la partie haute pression du réacteur.

Le conduit 32 comporte une portion terminale 32a qui est pourvue, à son extrémité libre d'un orifice de sortie 32b. Ainsi alimenté en air comprimé, le conduit transporte cet air jusqu'à son orifice de sortie où il est éjecté sous forme d'un jet.

Dans l'exemple représenté sur la figure 2a, l'orifice est de forme circulaire et le jet adopte un diamètre circulaire. Toutefois, d'autres configurations d'orifices de sortie sont possibles.

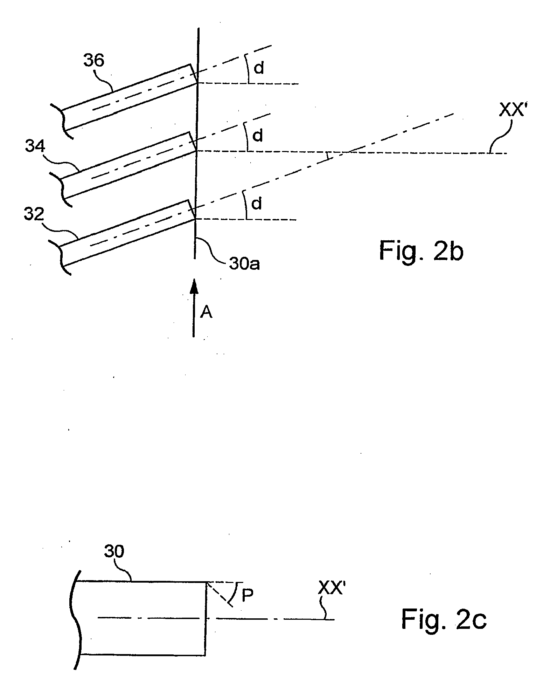

La figure 2b montre l'agencement en vue de dessus (en projection dans un plan contenant XX') de trois conduits 32, 34 et 36 en relation avec le bord de fuite 30a et leur inclinaison. Les trois conduits ont sensiblement la même orientation angulaire afin que les jets sortant de ces conduits soient orientés dans la même direction. Cette direction forme un angle de dérapage d avec l'axe XX'.

Tous les conduits des figures 2a et 2b présentent un même angle de dérapage qui est généralement compris entre 40 et 70°.

L'inclinaison des conduits donne aux jets qui en sont issus une composante de vitesse tangentielle par rapport à la vitesse du jet propulsif (flux éjecté). Cette composante tangentielle, du fait de l'interaction avec le jet propulsif, provoque une rotation des jets sur eux-mêmes.

Lorsque la réalisation concerne la couronne séparant le jet extérieur froid (flux secondaire) et le jet central chaud (flux primaire), la rotation des jets entraine de l'air froid extérieur à l'intérieur du jet propulsif, de l'air chaud ressortant au contraire à l'extérieur des jets.

Il en résulte une homogénéisation des températures dès la sortie de la tuyère, pouvant contribuer à la réduction du bruit généré par cette tuyère. Il se produit également un effet d'écran thermique, également favorable à la réduction du bruit rayonné.

On notera que la portion terminale du conduit 32 comprend une première partie 32a₁ (figure 2a) qui est coudée par rapport à une partie amont de conduit 32c afin de conférer au conduit l'orientation (angle d) illustrée sur la figure 2b. La portion terminale 32a comprend une deuxième partie droite 32a₂ qui forme l'extrémité libre du conduit et qui possède l'orifice de sotie 32b.

Par ailleurs, les conduits primaires 32a, 32b sont également inclinés, au moins dans leur partie terminale, en direction de l'axe longitudinal XX', suivant un angle p appelé angle de pénétration.

L'angle p est représenté à la figure 2c qui est une vue suivant la direction A de la figure 2b et qui montre, en vue de côté, l'inclinaison sur l'axe XX' des conduits.

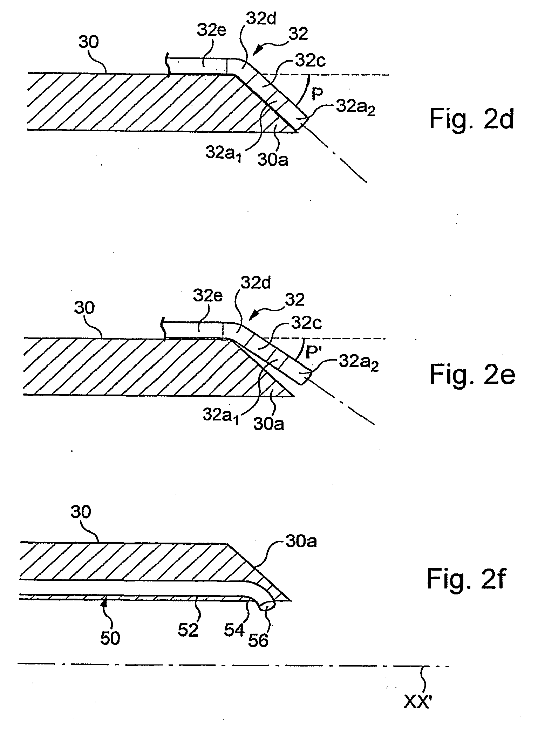

Cette inclinaison est généralement obtenue grâce à la forme biseautée du bord de fuite (lèvre de sortie) de l'extrémité aval de la paroi, telle que représentée de façon agrandie à la figure 2d. L'angle p est généralement compris entre 8° (faible pénétration) et 60° (forte pénétration). Cette inclinaison permet d'augmenter la perturbation du flux éjecté en inclinant le jet fluide sur l'axe du flux.

Ainsi, la portion terminale 32a et la portion amont 32c du conduit primaire sont disposées contre la face externe inclinée du bord de fuite et adoptent la même orientation par rapport à l'axe XX' que le bord de fuite.

Le conduit 32 comprend, en amont, une partie coudée 32d par rapport à une partie rectiligne horizontale 32e agencée contre la face externe de la paroi 30. Cette partie coudée confère au conduit 32 l'inclinaison p souhaitée.

Toutefois, les conduits peuvent alternativement adopter une orientation différente (angle p') de celle du bord de fuite comme représenté sur la figure 2e qui est une variante de la configuration de la figure 2d.

On notera que l'angle p' peut être davantage incliné sur l'axe XX' que l'angle p dans une variante de réalisation.

Par ailleurs, on notera que les conduits ou tubulures peuvent être intégrés dans l'épaisseur de la paroi (capot) de la nacelle et donc adopter des angles différents de ceux de la paroi.

Ainsi, la figure 2f illustre une variante dans laquelle un conduit 50 conforme à l'invention est aménagé à l'intérieur de la paroi 30 le long de la direction d'extension (longitudinale) de la paroi.

Ce conduit comprend une portion rectiligne 52 et une portion de conduit 54 formant un coude par rapport à la portion rectiligne afin de donner à l'orifice de sortie 56 du conduit l'orientation souhaitée (angle de dérapage et angle de pénétration).

Le coude est suffisamment court pour que l'orifice de sortie débouche au ras de la paroi où à faible proximité de celle-ci.

La portion de conduit formant le coude peut présenter une courbure continue et, par exemple, être réalise par cintrage.

Alternativement, la portion formant le coude peut être formée par une portion droite de conduit raccordée à la portion rectiligne suivant un angle de raccord.

On notera en outre que l'implantation dans la paroi des conduits permet de ne pas augmenter l'encombrement et de ne pas pénaliser les performances aérodynamiques.

Selon une autre variante, les conduits peuvent être inclinés chacun selon un angle de pénétration différent afin de moduler l'impact des jets issus de ces conduits suivant le pourtour de l'extrémité aval 30a, par exemple, pour des raisons de directivité du bruit, des contraintes d'environnement.... On notera toutefois que les angles sont sélectionnés de façon appropriée pour que les jets ainsi orientés permettent de générer des tourbillons longitudinaux.

L'injection latérale des jets en périphérie du flux éjecté axialement fournit une couverture fluidique (non continue car les jets sont disjoints) étendue sur une courte distance par rapport à l'extrémité aval 30a.

On notera que le nombre de conduits à installer dépend du diamètre de sortie de la tuyère.

Afin de réduire le bruit lié aux jets propulsifs des réacteurs au moment de la phase de décollage ou de la phase d'approche de l'avion, on déclenche un soufflage d'air comprimé au travers des amenées d'air jusqu'aux conduits répartis au niveau de la couronne de sortie de ladite tuyère. La couronne concernée peut être soit celle (couronne intérieure) séparant le flux chaud (flux primaire) et le flux froid (flux secondaire), soit celle séparant le flux froid (flux secondaire) et l'air ambiant (couronne de nacelle). De par le positionnement des conduits au niveau de la couronne de sortie, ainsi que leur répartition, les jets d'air comprimés sont propulsés hors des conduits selon les incidences de dérapage et de pénétration sélectionnées, perturbant alors le jet propulsif.

Les jets d'air constituent des jets contrôlés. Reliés à la partie haute pression du réacteur, leur alimentation est rendue effective uniquement dans les phases où le contrôle est nécessaire (généralement lors des phases de décollage et d'atterrissage). En dehors de ces phases, les dispositifs fluidiques selon l'invention sont rendus inactifs par simple coupure de l'amenée d'air comprimé. L'aéronef ainsi équipé, ne présente aucune pénalisation en terme de traînée ou de perte de poussée.

On notera que les jets peuvent être activés indépendamment les uns des autres, offrant ainsi un système de perturbation du flux éjecté particulièrement flexible. Ainsi, il peut être envisagé une activation partielle desdits jets : actionnement des jets positionnés sur le haut, le bas, la droite ou la gauche de ladite tuyère de la figure 2a, modifiant ainsi la directivité des émissions sonores.

Selon une variante, les jets de contrôle peuvent être actionnés de façon instationnaire afin de réduire les débits des jets de contrôle ou d'améliorer les performances du contrôle.

Il convient de préciser que la vitesse de l'air comprimé circulant dans les conduits est sensiblement identique à la vitesse du flux éjecté par la tuyère (jet propulsif).

Le rapport massique entre le débit des jets d'air éjectés par les conduits et celui du flux éjecté est compris entre environ 0,2% et 2%.

Selon une variante, les jets d'air peuvent être supersoniques en fonction des applications envisagées.

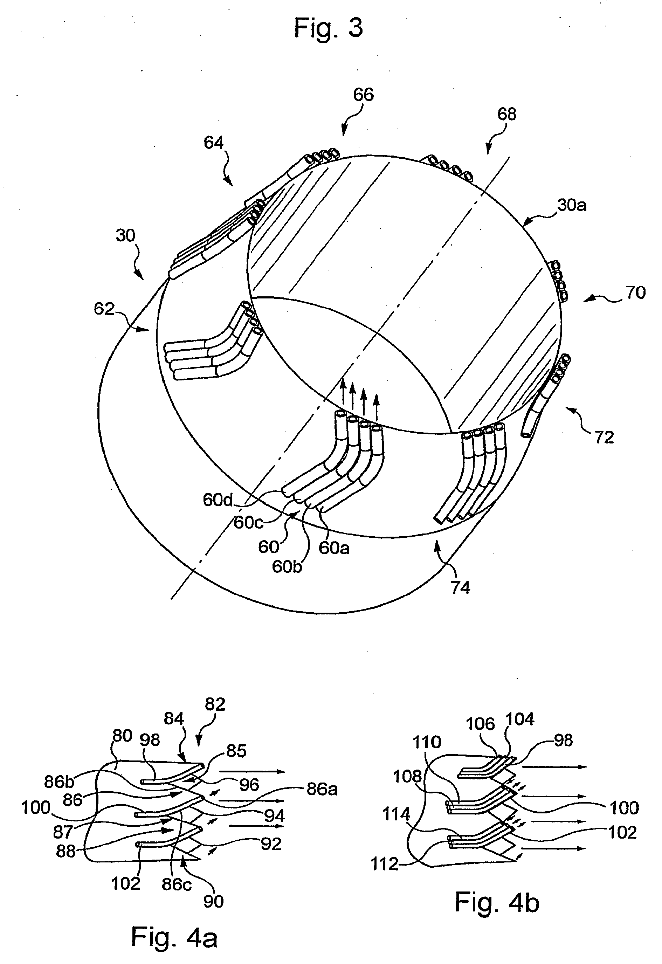

Un deuxième mode de réalisation de l'invention est illustré à la figure 3.

Cette figure diffère de la figure 2a par le nombre de conduits orientés parallèlement avec un même angle de dérapage (l'angle de pénétration peut varier entre les conduits).

L'agencement des conduits de la figure 2a est repris (les conduits de la figure 2a sont appelés ici conduits primaires) mais plusieurs autres conduits, dits secondaires, sont adjoints à chaque conduit primaire, parallèlement à celui-ci, afin de constituer un faisceau de conduits ayant la même orientation (dérapage).

Ainsi, une pluralité de faisceaux 60, 62, 64, 66, 68, 70, 72, 74 sont disposés à la périphérie de l'extrémité aval 30a de la paroi 30 de la nacelle et éjectent sur commande des jets renforcés.

Chaque faisceau de conduits est constitué, comme pour le faisceau 60, d'un conduit primaire 60a (identique au conduit 32 de la figure 2a) auquel sont associés plusieurs, par exemple trois, conduits secondaires 60b, 60c, 60d.

Un tel faisceau produit une perturbation fluidique de plus grande extension (latérale) et l'interaction avec le flux propulsif éjecté produit des effets amplifiés.

La pluralité de jets quasi-jointifs issus d'un faisceau forment en quelque sorte une nappe fluidique.

La figure 4a représente une paroi sensiblement cylindrique 80 d'une tuyère (primaire ou secondaire) dans laquelle s'écoule un flux de gaz (primaire ou secondaire) qui est éjecté à l'extrémité aval 82 (bord de fuite) de cette paroi.

Cette extrémité aval diffère de l'extrémité aval 30a des figures 2a-2e par la présence d'une pluralité de chevrons mécaniques successifs 84 à 96 répartis sur toute la périphérie du bord de fuite et qui confèrent à ce dernier une forme dentelée obtenue par découpe.

L'extrémité aval 82 est ainsi configurée en une alternance de sommets et de creux reliés entre eux par des portions inclinées et qui constituent une succession de motifs de chevrons.

Chaque chevron (tel que le chevron 86) comprend un sommet (86a) et deux parties inclinées (86b, 86c) reliant respectivement ce sommet à deux creux adjacents (85,87).

Comme représenté sur la figure 4a, un conduit apte à éjecter un jet de fluide est associé à chaque chevron. Seuls trois conduits 98, 100, 102 sont représentés sur cette figure sur la face externe des chevrons.

Il convient de noter que les conduits peuvent alternativement être localisés dans l'épaisseur de la paroi 80 afin de perturber le moins possible l'écoulement externe à la paroi.

Selon une autre variante, les conduits peuvent être agencés sur la face interne de la paroi 80, c'est-à-dire à l'intérieur de la tuyère par laquelle est éjecté le flux de gaz.

Les conduits sont agencés, au moins dans leur portion terminale, parallèlement entre eux afin que les jets de fluide générés aient tous la même direction par rapport à l'axe longitudinal (angle de dérapage).

Plus particulièrement, les conduits peuvent être conformés pour que leur portion terminale soit parallèle à la direction d'inclinaison d'une des parties inclinées des chevrons. Ainsi, l'angle de dérapage est donné par l'inclinaison de ces parties inclinées qui forment les bords du chevron, provoquant ainsi une dissymétrie fluidique des chevrons.

Les conduits sont, par exemple, agencés au plus près du bord des chevrons, comme représenté sur la figure 4a, afin que l'orifice de sortie des conduits soit disposé au sommet du chevron correspondant.

Ainsi localisé, le jet de fluide produit ses effets maximum.

Les effets sont ainsi amplifiés car les jets viennent contribuer aux structures tourbillonnaires générées par les chevrons. Cet agencement permet de mettre en oeuvre des chevrons de plus petite taille mais de même efficacité avec de moindres pénalisations en terme de traînée durant le vol de croisière (car plus petits et/ou moins invasifs dans le flux propulsif).

On notera que l'orifice de sortie de chaque conduit est incliné en direction de l'axe longitudinal XX' afin de conférer au conduit considéré l'angle de pénétration souhaité.

La figure 4b illustre un mode de réalisation de l'invention qui diffère du troisième mode de la figure 4a par la présence d'une pluralité de conduits agencés cote à cote sur les chevrons au lieu d'un seul conduit.

Un faisceau de conduits (par exemple trois conduits) est disposé à proximité d'un des bords de chaque motif de chevron pour que le faisceau de jets de fluide généré (nappe fluidique) soit éjecté le plus près possible du sommet du chevron et produise ainsi une efficacité maximale.

Plus particulièrement, chaque conduit appelé conduit primaire, agencé le long du bord du chevron de la figure 4a est conservé. Un ou plusieurs autres conduits dits secondaires (par exemple deux conduits) sont accolés au conduit primaire pour constituer un faisceau de conduits parallèles ayant donc un même angle de dérapage.

Les trois faisceaux représentés comprennent ainsi les conduits 98, 104, 106, 100, 108, 111 et 102, 112, 114.

Les conduits peuvent avoir tous le même angle de pénétration au sein d'un même faisceau et parmi chacun des faisceaux.

Alternativement, à l'intérieur d'un même faisceau les conduits peuvent prendre différentes orientations afin de moduler l'effet fluidique produit et également l'effet acoustique. Par exemple, le conduit adjacent au bord du chevron peut présenter un angle de pénétration de valeur plus élevée que celui du conduit le plus éloigné.

Cet agencement permet d'augmenter la production de structures tourbillonnaires longitudinales.

Selon une autre variante, les orientations peuvent alternativement varier d'un faisceau à l'autre mais rester identiques au sein d'un même faisceau.

Selon encore une autre variante, les orientations peuvent alternativement varier au sein d'un même faisceau et d'un faisceau à l'autre.

Ces différentes variantes permettent de créer des effets semblables aux rémiges des ailes d'oiseaux en mélangeant différents orientations possibles de tourbillons.

Les différents agencements décrits ci-dessus permettent de faire varier localement les effets des jets tant longitudinalement que transversalement.

Ces agencements permettent également d'adapter l'orientation géométrique des jets à certaines directions privilégiées d'émission des nuisances sonores.

Ces agencements permettent en outre de réduire le bruit en répartissant les énergies.

Les différentes remarques et avantages formulés à l'égard du mode de réalisation de la figure 4a s'appliquent également au mode de la figure 4b.

## Revendications

1. Réacteur d'aéronef d'axe longitudinal (XX'), comprenant une paroi (30) entourant un flux de gaz qui est éjecté à une extrémité aval de la paroi suivant l'axe longitudinal, plusieurs conduits (32, 34, 36, 38, 40, 42, 44, 46) répartis à la périphérie de l'extrémité aval (30a) de la paroi et comprenant chacun une portion terminale munie d'un orifice de sortie, chaque conduit étant apte à éjecter un jet de fluide par son orifice de sortie, lesdits conduits ayant sensiblement la même orientation angulaire par rapport à l'extrémité aval (30a) afin que les jets sortant de ces conduits soient orientés dans la même direction, chaque jet de fluide éjecté par l'orifice de sortie (32b) correspondant formant un angle de dérapage (d) avec l'axe longitudinal (XX') suivant une vue en projection de l'orifice de sortie (32b) sur l'axe longitudinal dans un plan contenant l'axe longitudinal, lesdits conduits, appelés conduits primaires, étant écartés les uns des autres, **caractérisé en ce que** au moins un conduit appelé conduit secondaire est accolé à chaque conduit primaire et disposé de façon adjacente et parallèle à celui-ci.

2. Réacteur selon la revendication 1, **caractérisé en ce que** les conduits sont conformés de façon à éjecter chaque jet de fluide de façon inclinée en direction de l'axe longitudinal (XX') suivant un angle de pénétration (p).

3. Réacteur selon les revendications 1 et 2, **caractérisé en ce que** l'angle de dérapage est formé par l'orientation de la portion terminale d'un conduit avec l'axe longitudinal (XX'), tandis que l'angle de pénétration est formé par l'inclinaison de l'orifice de sortie du conduit en direction de l'axe longitudinal (XX').

4. Réacteur selon les revendications 1 et 2, **caractérisé en ce que** l'angle de dérapage est formé par l'orientation de l'orifice de sortie d'un conduit avec l'axe longitudinal (XX') tandis que l'angle de pénétration est formé par l'inclinaison de la portion terminale d'un conduit en direction de l'axe longitudinal (XX').

5. Réacteur selon l'une des revendications 1 à 4, **caractérisé en ce que** les conduits sont conformés de façon à éjecter chaque jet de fluide en formant, avec l'axe longitudinal (XX') un angle de dérapage qui est compris entre 40 et 70°.

6. Réacteur selon l'une des revendications 2 à 4, **caractérisé en ce que** l'angle de pénétration est compris entre 8 et 60°.

7. Réacteur selon l'une des revendications 1 à 6, **caractérisé en ce que** l'extrémité aval de la paroi comporte une pluralité de chevrons répartis à la périphérie de celle-ci afin de former un dispositif mécanique d'atténuation acoustique.

8. Réacteur selon la revendication 7, **caractérisé en ce que** les conduits sont associés aux chevrons qui confèrent à l'extrémité aval de la paroi une forme dentelée comprenant une succession de sommets et de creux.

9. Aéronef comprenant au moins un réacteur d'aéronef selon l'une des revendications 1 à 8.

## Patentansprüche

1. Flugzeugdüsentriebwerk mit einer Längsachse (XX'), umfassend eine Wand (30), die einen Gasstrom umgibt, der an einem stromabwärtigen Ende der Wand entlang der Längsachse ausgestoßen wird, mehrere Leitungen (32, 34, 36, 38, 40, 42, 44, 46), die an der Peripherie des stromabwärtigen Endes (30a) der Wand verteilt sind und jeweils einen Endabschnitt umfassen, der mit einer Ausgangsöffnung versehen ist, wobei jede Leitung geeignet ist, einen Fluidstrahl durch ihre Ausgangsöffnung auszustoßen, wobei die Leitungen im Wesentlichen dieselbe Winkelausrichtung in Bezug auf das stromabwärtige Ende (30a) haben, damit die aus diesen Leitungen austretenden Strahlen in dieselbe Richtung gerichtet werden, wobei jeder durch die entsprechende Ausgangsöffnung (32b) ausgestoßene Fluidstrahl einen Schiebewinkel (d) mit der Längsachse (XX') in einer Projektionsansicht der Ausgangsöffnung (32b) auf der Längsachse in einer die Längsachse enthaltenden Ebene bildet, wobei die Leitungen, primäre Leitungen genannt, voneinander entfernt sind, **dadurch gekennzeichnet, dass** mindestens eine Leitung, sekundäre Leitung genannt, an jeder primären Leitung befestigt und an diese angrenzend und zu dieser parallel angeordnet ist.

2. Düsentriebwerk nach Anspruch 1, **dadurch gekennzeichnet, dass** die Leitungen derart ausgebildet sind, dass sie jeden Fluidstrahl in Richtung der Längsachse (XX') um einen Penetrationswinkel (p) geneigt ausstoßen.

3. Düsentriebwerk nach den Ansprüchen 1 und 2, **dadurch gekennzeichnet, dass** der Schiebewinkel durch die Ausrichtung des Endabschnitts einer Leitung mit der Längsachse (XX') gebildet ist, während der Penetrationswinkel durch die Neigung der Ausgangsöffnung der Leitung in Richtung der Längsachse (XX') gebildet ist.

4. Düsentriebwerk nach den Ansprüchen 1 und 2, **dadurch gekennzeichnet, dass** der Schiebewinkel durch die Ausrichtung der Ausgangsöffnung einer Leitung mit der Längsachse (XX') gebildet ist, während der Penetrationswinkel durch die Neigung des Endabschnitts einer Leitung in Richtung der Längsachse (XX') gebildet ist.

5. Düsentriebwerk nach einem der Ansprüche 1 bis 4, **dadurch gekennzeichnet, dass** die Leitungen derart ausgebildet sind, dass jeder Fluidstrahl ausgestoßen wird, wobei mit der Längsachse (XX') ein Schiebewinkel gebildet wird, der zwischen 40 und 70° beträgt.

6. Düsentriebwerk nach einem der Ansprüche 2 bis 4, **dadurch gekennzeichnet, dass** der Penetrationswinkel zwischen 8 und 60° beträgt.

7. Düsentriebwerk nach einem der Ansprüche 1 bis 6, **dadurch gekennzeichnet, dass** das stromabwärtige Ende der Wand eine Vielzahl von Sparren umfasst, die an der Peripherie derselben verteilt sind, um eine mechanische akustische Dämpfungsvorrichtung zu bilden.

8. Düsentriebwerk nach Anspruch 7, **dadurch gekennzeichnet, dass** die Leitungen mit den Sparren verbunden sind, die dem stromabwärtigen Ende der Wand eine gezahnte Form, umfassend eine Aufeinanderfolge von Erhöhungen und Vertiefungen, verleihen.

9. Flugzeug, umfassend mindestens ein Flugzeugdüsentriebwerk nach einem der Ansprüche 1 bis 8.

## Claims

1. Aircraft jet engine having a longitudinal axis (XX'), comprising a wall (30) surrounding a flow of gas which is ejected at a downstream end of the wall along the longitudinal axis, multiple ducts (32, 34, 36, 38, 40, 42, 44, 46) distributed at the periphery of the downstream end (30a) of the wall and each comprising an end portion provided with an outlet opening, each duct being able to eject a jet of fluid via its outlet opening, said ducts having essentially the same angular orientation with respect to the downstream end (30a) in order that the jets exiting from these ducts are oriented in the same direction, each jet of fluid ejected via the corresponding outlet opening (32b) forming an offset angle (d) with the longitudinal axis (XX') as seen in a projection of the outlet opening (32b) onto the longitudinal axis in a plane containing the longitudinal axis, said ducts, termed primary ducts, being spaced apart from one another, **characterised in that** at least one duct termed secondary duct adjoins each primary duct and is arranged adjacent and parallel thereto.

2. Jet engine according to claim 1, **characterised in that** the ducts are shaped so as to eject each jet of fluid in an inclined manner in the direction of the longitudinal axis (XX') along a penetration angle (p).

3. Jet engine according to claims 1 and 2, **characterised in that** the offset angle is formed by the orientation of the end portion of a duct with the longitudinal axis (XX'), whereas the penetration angle is formed by the inclination of the outlet opening of the duct in the direction of the longitudinal axis (XX').

4. Jet engine according to claims 1 and 2, **characterised in that** the offset angle is formed by the orientation of the outlet opening of a duct with the longitudinal axis (XX'), whereas the penetration angle is formed by the inclination of the end portion of a duct in the direction of the longitudinal axis (XX').

5. Jet engine according to one of claims 1 to 4, **characterised in that** the ducts are formed so as to eject each jet of fluid, so forming, with the longitudinal axis (XX'), an offset angle between 40° and 70°.

6. Jet engine according to one of claims 2 to 4, **characterised in that** the penetration angle is between 8° and 60°.

7. Jet engine according to one of claims 1 to 6, **characterised in that** the downstream end of the wall comprises a plurality of chevrons distributed at the periphery of the former so as to form a mechanical acoustic attenuation device.

8. Jet engine according to claim 7, **characterised in that** the ducts are associated with the chevrons, which give the downstream end of the wall a toothed shape comprising a sequence of peaks and troughs.

9. Aircraft comprising at least one aircraft jet engine according to one of claims 1 to 8.
